# EUROPEAN PATENT SPECIFICATION

(11) **EP 3 545 111 B1**
(45) Date of publication and mention of the grant of the patent: **20.07.2022**
(21) Application number: 17874670.7
(22) Date of filing: 22.11.2017
(51) Int. Cl.: C21B 13/04, C22B 5/00, C22B 1/24, C21B 13/00, C22B 1/245, C22B 5/12

(54) **LOW TEMPERATURE DIRECT REDUCTION OF METAL OXIDES VIA THE IN SITU PRODUCTION OF REDUCING GAS**
NIEDERTEMPERATURDIREKTREDUKTION VON METALLOXIDEN ÜBER DIE IN-SITU-ERZEUGUNG VON REDUKTIONSGAS
RÉDUCTION DIRECTE À BASSE TEMPÉRATURE D'OXYDES MÉTALLIQUES PAR PRODUCTION IN SITU DE GAZ RÉDUCTEUR

(30) Priority: 23.11.2016 AU 2016904806
(43) Date of publication of application: 02.10.2019
(73) Proprietor: Environmental Clean Technologies Limited, South Yarra, Victoria 3141 (AU)
(72) Inventor: HENLEY-SMITH, Keith Michael, Taylors Lakes, Victoria 3038 (AU); GILES, Adam David, Sunbury, Victoria 3429 (AU); BARTSCH, Lachlan Phillip Clive, Brunswick, Victoria 3056 (AU); MOORE, Ashley Charles, Black Rock, Victoria 3193 (AU)
(74) Representative: Teuten, Andrew John
(86) International application number: PCT/AU2017/051281
(87) International publication number: WO 2018/094453

(56) References cited:
- WO-A1-03/080874
- WO-A1-2004/035845
- AU-A- 05 439 586
- AU-B2- 703 821
- US-A- 2 014 873
- US-A- 2 470 106
- US-A- 3 495 971
- US-A- 3 938 987
- US-A1- 2003 037 485

## Description

### Field of the invention

The present invention relates to a continuous process for low temperature reduction of metal oxides from carbonaceous material, using *in situ* produced reducing gas. In particular, but not exclusively, the invention relates to the products produced by the process and to a retort in which the process is conducted.

### Background of the invention

The present invention provides significant improvements over the process for reduction of metal oxide to metal conceived by Wilson and disclosed in Australian Patent No. AU 703,821. That process, known generally as the Matmor process, involves reduction of metal oxide fines to a metal containing product involving the steps of:
(a) Mixing a carbonaceous material with metal oxide fines to produce a cohesive mass;
(b) Compacting the cohesive mass to produce a composite body;
(c) Drying the composite body;
(d) Heating the composite body in a reducing atmosphere at a high temperature of from about 850°C to 1,050°C to form a reductant from the carbonaceous material that reduces a proportion of the metal oxide to metal;
(e) Contacting the hot, reduced composite body from step (d) with an oxygencontaining gas to combust a sufficient quantity of the carbonaceous material so as to raise the temperature of the body to the melting temperature of the metal to thereby form a molten metal containing phase; and
(f) Cooling the molten metal containing phase to produce the metal containing product.

The Matmor process could, for example, be performed in a retort as disclosed in Australian Patent No. AU 767,268, also to Wilson. The early steps of the Matmor process of producing composite bodies of carbonaceous material (with which metal oxide fines can be incorporated) may involve technology such as disclosed in Australian Patent Nos. 561,586 and 588,565 that are directed to processes for subjecting brown coal, with or without the addition of water, to shearing forces to produce a plastic mass, from which pellets are produced by extrusion and then drying the pellets using air at or near ambient temperature. Improvements in the approach to drying the pellets are disclosed in International Patent Publication No. WO 2005/028977.

The Matmor process relies upon the adoption of a steady state operating temperature of 850°C to 1,050°C to achieve reduction of metallic oxides to metal via what is predominantly a CO gas driven reduction mechanism. The Matmor process involves a target reduction temperature of 950°C for ferric oxides (Fe₂O₃) and 1050°C for ferrous oxides (Fe₃O₄ and FeO); reaching the reduction temperature in 3-4 hours, but preferably 2-3 or 2-2.5 hours; and holding the material at the desired temperature for 1 to 1.5 hours. The Matmor process also requires the inclusion of flux as part of the input mix and an oxygen lancing step in the metal melting aspect of the method.

The process of the present invention, which is referred to by the applicant as the HydroMOR process, utilises process operating parameters that differ significantly from the existing Matmor process including in relation to operating temperature, residence time, input material blend ratios and chemical pathway. The result is a process that is not only materially different from the Matmor process, but which may offer a number of significant advantages over the Matmor technology and other known technologies.

Conventionally, reduction of various metallic oxides is performed via a number of well-established commercial scale pyro-metallurgical methods, such as a Blast Furnace or coal-based Direct Reduced Iron (DRI) (in the case of reduction of iron oxides) techniques. These methods generally require elevated steady state operating temperatures in excess of 1200°C for residence times of up to 18 hours and these methods predominantly rely on carbon monoxide as the primary reductant.

Chinese Patent No. CN 102747179 discloses a direct reduced iron production method that is said to utilise high activity lignite for production of coke and low temperature reduction. The document refers to adoption of a coke : iron ore ratio of 1:5 to 5:6, the adoption of a vertical furnace, reaction temperature of 800°C to 1100°C and reaction time of 0.25 to 2.0 hours. The document requires the use of coke rather than unpyrolised carbonaceous material and does not make any mention or suggestion of adopting composite bodies or pellets of carbonaceous and metal oxide containing material. It is also clear that the document relates to a batch rather than to a continuous process.

International Patent Publication No. WO 01/054819 is generally directed to a process for upgrading low rank carbonaceous material (similar to that disclosed in Australian Patent Nos. 561,586 and 588,565) of pulverising, forming a plastic mass with water, attritioning and forming into pellets. Although it refers generally to an embodiment said to involve low temperature reduction of pellets also including metal ore, and reduction of hematite to magnetite and in turn further reduction to wustite at temperatures of 500 to 700°C, the document also indicates that wustite (FeO) will be "reduced to metallic iron from around 900°C". The examples refer to coal to metal ore ratios of 1:2 (Ex 2) and 1:1 (Ex 3), and the use of temperatures of 1050°C and 1170°C, respectively. The document does not disclose the adoption of a continuous process.

Australian Patent No. AU 586,470 discloses the preparation of composite coal / iron oxide particles in much the same manner as WO 01/054819 and then the reduction of these pellets to form metal. However, this document provides a recommendation to conduct an initial pyrolysis treatment at 300°C to 400°C in a nitrogen atmosphere before subsequent higher temperature treatment of 600°C and 900°C (Ex 1) or 700°C and 1070°C (Ex 2). This document does not suggest conducting a continuous process.

United States patent Publication No. 2003/0037485 is directed to upgrading of low rank carbonaceous material such as brown coal, but also refers to a process involving heating a plastic mass or composite plastic mass pellets of brown coal and metal containing material to pyrolyse the brown coal and form reductant to reduce the metal containing material to metal. The document mentions that the pyrolysis takes place at 500 °C to 700 °C, that volatiles are released from the brown coal pellets when heated to 400 °C to 700 °C (mainly hydrocarbons such as methane which largely decompose to carbon monoxide, hydrogen and carbon dioxide) and also notes that a supposed advantage of this technology is that reduction of iron oxide takes place at a temperature of 500 °C to 700 °C, which is a considerably lower temperature than the normally required temperature of about 1200 °C. However, the examples demonstrate heating to a significantly higher temperature, with Example 2 (using a coal to dust (metal ore) ratio of 1:2) involving heating to 700 °C for 50 minutes, then raising the temperature progressively to 940 °C and then further to 1050 °C over a further 30 minute period. The document does not disclose adoption of a continuous process.

International Patent Publication No. WO2004/035845 is directed to a process and apparatus for extracting zinc and other metals such as lead and iron, particularly from toxic electric arc furnace dust waste. The process involves heating composite bodies comprising carbonaceous material and zinc and iron ores in a reducing atmosphere at a temperature below the melting temperature of iron but sufficient to form reductant from the carbonaceous material and to reduce zinc oxide to zinc vapour. The zinc vapour is then collected and condensed. The document outlines that the initial heating and vapourisation of zinc takes place at a temperature of 907 °C (boiling point of zinc) and that reduction of iron oxides to iron takes place under the Matmor conditions, which as discussed above involves the adoption of a steady state operating temperature of 850 °C to 1,050 °C to achieve reduction of metallic oxides to metal via what is predominantly a CO gas driven reduction mechanism. The document also discloses a subsequent heating step, preferably involving the addition of flux, at a temperature sufficient to effect melting of iron (i.e. above 1538 °C). The document does not disclose the adoption of a continuous process.

In comparison the HydroMOR process of the present invention involves a relatively low temperature reduction reaction that takes place at temperatures of less than 950°C, a relatively short process residence time of 15 minutes to 3 hours and utilisation of an alternative *in situ* gas reduction pathway, which is understood to be primarily H₂ gas driven. This process may offer efficiencies in terms of reduced energy requirements (and therefore reduced coal use / reduced carbon intensity) in view of lower operating temperatures, reduced residence time, reduced carbonaceous material to metal oxide ratio, the ability to use gases such as hydrocarbons and hydrogen released in the process as an energy source for heating and the flexibility of being able to apply the process to a diverse range of input materials. The process of the invention also gives rise to a highly pure metal product and does not require the use of flux for removal of impurities.

International Patent Publication No. WO2003/080874 discloses a process and apparatus for the direct reduction of iron oxides in an electrothermal fluidized bed and resultant product.

United States Patent No. 3,938,987 discloses a process for producing a charge composition for a smelting furnace whereby a deficiency of nonagglomerating carbonaceous material is utilised within pellets formed from iron oxide ore.

Australian Patent No. 703,821 discloses a process for the reduction of metal oxide fines to a metal containing product including the steps of (a) mixing carbonaceous material with metal oxide fines to produce a cohesive mass, (b) compacting the cohesive mass to produce a composite body, (c) drying the composite body, (d) heating the composite body in a reducing atmosphere, (e) contacting the hot, reduced composite body from step (d) with an oxygen containing gas and (f) cooling the molten-metal containing phase.

United States Patent No. 3,495,971 discloses a charge composition for smelting furnaces comprising relatively finely divided iron ore and solid carbonaceous material in pelletized form of high carbon/oxygen ratio with corrective course iron ore included to yield a composite charge having the correct lower carbon/oxygen ratio.

### Summary of the invention

The present invention is defined in appended claim 1, further favourable embodiments being defined in dependent appended claims 2-14.

According to one embodiment of the present invention there is provided a method of reducing metal oxide to metal in a continuous process comprising:
(a) continuously introducing composite bodies comprising low rank carbonaceous material having moisture content of from about 30% to about 70% and metal oxide containing material that are in intimate contact and in a dry mix ratio of from about 1:2 to about 1:10 by weight to an upper region of an upright retort;
(b) conveying said bodies from said upper region to a heated lower region of said retort wherein said composite bodies are exposed to increasing temperature of up to about 950°C and wherein said composite bodies are exposed to reducing gas generated *in situ* for a period of from about 15 minutes to about 3 hours to thereby produce a reduced metal containing product; and
(c) continuously removing the reduced metal containing product from a lower region of the retort.

In one aspect of the invention the composite bodies comprising low rank carbonaceous material and metal oxide are produced by mixing / attritioning particulate low rank carbonaceous material and metal oxide containing material with optional addition of water to produce a plastic mass, forming moist composite bodies and drying to produce dried composite bodies.

In another aspect the metal oxide containing material is a metal oxide containing mineral ore or a metal oxide containing material that is a product or by-product of an industrial process.

For example, the moisture content of the dried composite bodies is up to about 15 % w/w.

In another aspect the forming of moist composite bodies is by extrusion and the composite bodies are pellets.

In one aspect the dry mix ratio of low rank carbonaceous material to metal oxide containing material is from about 1:3 to about 1:9 by weight. For example, in a preferred aspect the dry mix ratio of low rank carbonaceous material to metal oxide containing material is about 1:5 by weight.

In one aspect of the invention the low rank carbonaceous material is lignite or sub-bituminous coal. In another aspect the low rank carbonaceous material is peat.

For example, the metal oxide containing material may comprise one or more of ferrous oxide (FeO), hematite (Fe₂O₃), magnetite (Fe₃O₄), chromite (FeCr₂O₄), magnesiochromite (MgCr₂O₄), ilmenite (FeO.TiO₂), manganese ore (Mn₂O₃) and limonite (FeO(OH). H₂O.

In one aspect of the invention all reducing gas is atmospheric or is produced *in situ.* For example, the reducing gas may comprise gases selected from one or more of C₁ - C₁₀ hydrocarbon, H₂, CO, CO₂ and H₂O. For example, the hydrocarbon may comprise C₁ - C₄ hydrocarbon.

In one aspect the composite bodies are exposed to reducing gas generated *in situ* for a period of from about 20 minutes to about 2 hours.

In one aspect of the invention the metal oxide reduction is primarily H₂ gas reduction.

In another aspect the metal oxide reduction occurs within the composite bodies due to reducing gas evolved within the composite bodies.

### Brief description of the figures

The present invention will be described by way of example with reference to the figures, as follows:

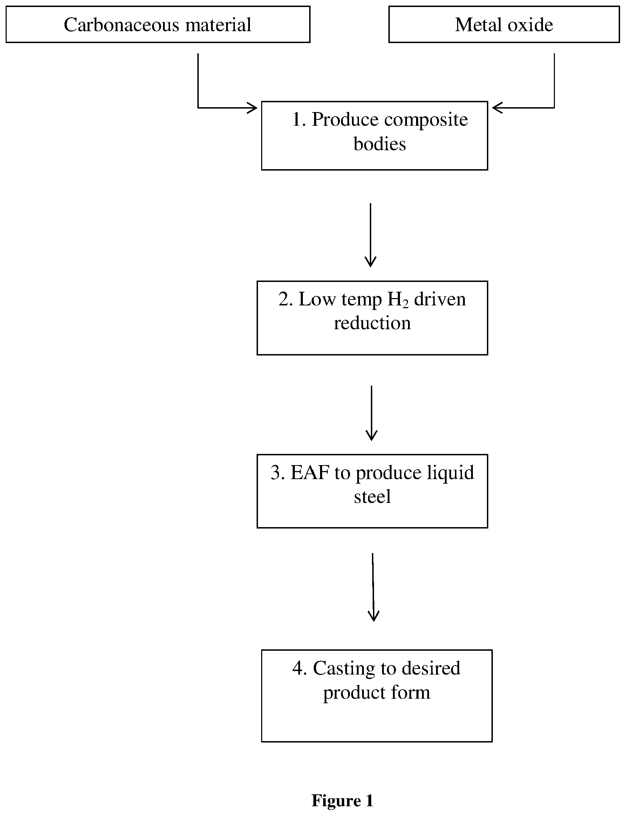

Figure 1 - shows a flowchart representing the stages of a metal production process that includes the steps of (1) forming carbonaceous material and metal oxide comprising material into composite bodies; (2) the process of the present invention of direct reduction of metal oxide in the composite bodies to metal at low temperature using reducing gas produced *in situ;* (3) the further processing of metal produced according to the invention in an Electric Arc Furnace (EAF) to form liquid metal that can then be; (4) formed into a desirable form such as by casting into billets. The present invention is concerned primarily with step (2) above.
Figure 2 - shows a diagrammatic representation of a retort that can be used in the process of reducing metal oxide to metal by *in situ* generation of reducing gas from carbonaceous material, according to the present invention.
Figure 3 - shows a graph of the proportion of metalisation achieved using the process of the invention at a range of processing temperatures (550 °C, 750 °C, 860 °C and 920 °C, with residence times of from 1 to 3 hours.
Figure 4 - shows a side view cross sectional diagram of a bench scale retort apparatus as used in the Examples.
Figure 5 - shows the XRD sample pattern obtained from the x-ray diffraction analysis of the sample output from Example 4.

### Detailed description of the invention

Throughout this specification and the claims that follow, unless the context requires otherwise, the word "comprise", and variations such as "comprises" and "comprising", will be understood to imply the inclusion of a stated integer or step or group of integers or steps but not the exclusion of any other integer or step or group of integers or steps.

Documents referred to within this specification are included herein in their entirety by way of reference.

The reference to any prior art in this specification is not, and should not be taken as, an acknowledgment or any form of suggestion that that prior art forms part of the common general knowledge in Australia or elsewhere

The process of the present invention, which is also referred to as the HydroMOR process, is a continuous process that includes the following general steps:
(a) Carbonaceous material is combined with a material comprising metal oxide. This may be achieved using what has previously been referred to as the Coldry process (which involves pulverisation, mixing, forming a plastic mass with optional addition of water if necessary, attritioning, extrusion to form composite bodies and low temperature drying, for example at temperatures of 15 °C - 80 °C or 25 °C - 60 °C) to achieve intimate contact between the constituents in hard composite bodies. The dry-basis mix ratio between the carbonaceous material and the metal oxide containing material is preferably from about 1:2 to about 1:10, depending upon the nature of the specific minerals utilised.
(b) The composite pellets are charged into an upright, generally vertical, retort configured to maintain a reducing atmosphere at operating temperature. The retort is heated via an external heat source such that the bottom portion of the furnace surrounding the retort is brought to a steady state operating temperature with a temperature profile ranging from as high as 950°C at the bottom, to as low as ambient temperature at the top, where new feed material is introduced. Under these conditions reducing gas is produced *in situ* and the composite bodies are exposed to the reducing gas for a period of from about 15 minutes to about 3 hours. Metal containing product is continuously removed from a lower region of the retort.

There are a number of advantages that may be achieved using the present process, depending upon the specific input materials and the exact process parameters adopted. For example, the external energy source requirement is generally low, given that upon reaching steady state operating temperature heating energy can in large part be provided by gas produced in the process being introduced into the combustion chamber. Further, reducing gases are progressively evolved between approximately 100°C and 950°C, which consist generally of various hydrocarbons (predominantly C₁ to C₁₀ hydrocarbons and particularly C₁ to C₆ hydrocarbons, oxygen or nitrogen substituted hydrocarbons and aromatics (including phenol) or C₁ to C₄ hydrocarbons (such as methane, ethane, propane and butane) as well as hydrogen, carbon monoxide, water and carbon dioxide.

Without wishing to be bound by theory it is understood that the various hydrocarbons, such as methane (CH₄), undergo *in situ* catalytic decomposition during the process, producing carbon and H2. The present inventors understand that the H₂ gas acts as the primary reducing agent to reduce the metallic oxides across a temperature range of from about 100°C to about 900°C, with resulting production of H₂O. It is believed that the hydrogen reduction reactions take place predominantly within individual composite bodies from gases evolved within each individual composite body.

It is further believed that the H₂O generated is then catalysed (for example by Fe or other metals such as Ni and Co) in a water gas shift reaction (WGSR), with C then consuming O from H₂O cracking to produce CO, CO₂ and H₂. As a result H is thereby recycled to participate in further reduction reactions. Outlet gases evolved in the process may also be combusted to contribute to the energy required to maintain operational processing temperature.

The preferred residence time of pellets under a reducing atmosphere will be varied depending upon the specific nature of the input materials and ambient conditions but will typically be in the range of from about 15 minutes to about 3 hours, such as about 20 minutes to about 2 hours, about 30 minutes to about 90 minutes, about 30 minutes to about 1 hour or about 35 minutes, about 40 minutes, about 45 minutes, about 50 minutes or about 55 minutes. Composite pellets are discharged incrementally based on achieving the desired residence time and level of reduction. Residence time will vary depending on feed material and will be managed such that the metal oxide reduces to metal, prior to discharge. As reduced pellets are discharged from the bottom of the retort, fresh feed pellets are charged to the top of the retort with the effect that the pellet bed is continuously replaced and metal is continuously produced.

Metal oxide containing feed material, including but not limited to iron ore, ores fines, mill scale and ilmenite, is combined with carbonaceous material (preferably high-moisture, high-volatile content low rank carbonaceous material) including but not limited to brown coal, sub-bituminous coal, coal fines, lignite and peat. Such low rank carbonaceous material will have moisture content of from about 30% to about 70%, such as from about 40% to about 65% or about 45% to about 60%. For example, the metal oxide containing material may comprise one or more of ferrous oxide (FeO), hematite (Fe₂O₃), magnetite (Fe₃O₄), chromite (FeCr₂O₄),magnesiochromite (MgCr₂O₄), ilmenite (FeO.TiO₂), manganese ore (Mn₂O₃) and limonite (FeO(OH). H₂O. Metal oxides of other metals, including but not limited to tin, copper, lead, aluminium, titanium, chromium, vanadium, chromium, zinc, manganese and tungsten etc. may also be utilised as feed material in the present invention. Such materials may be contained in ores obtained by mining or may be the products or by-products of other industrial processes such as the separation or partial purification of ores, processing to produce products or the recycling of products or by-products. In the case of metals, for example aluminium, which oxidise rapidly it may be necessary for the process to be performed in an inert atmosphere, such as under nitrogen gas.

The ratio of metallic oxide to carbonaceous material is determined to achieve a production state whereby there is sufficient reductant species to ensure chemical reactivity between the materials to achieve a high efficiency of reduction of the metallic oxide to metal under a reducing atmosphere.

The feed materials are processed in a manner that involves combining fine (for example which would have a 100% pass through a 5 mm grate) metallic oxide bearing material and low rank (high-moisture and high volatile) carbonaceous material. In a preferred approach this combination involves the optional addition of water and attritioning to produce a plastic mass, which produces a 'densification' reaction in the carbonaceous material that gives rise to dewatering of the carbonaceous material, as disclosed in Australian Patent Nos. 561,586 and 588,565. Adopting this approach also results in intimate and thorough mixing of the metal oxide containing material and carbonaceous material.

Composite bodies (for example pellets, blocks, tubes, cylinders or other pieces) can then be produced from the plastic mass, such as by extrusion into bodies of appropriate dimensions. These composite bodies can then be subjected to drying, preferably at low temperature to an equilibrium moisture content of up to about 15% w/w, preferably less than about 12%, less than about 10% and most preferably less than about 5%, such as from about 2% to about 5%. Low temperature drying promotes densification which results in an appropriate level of compressive strength amenable to maintaining composite body integrity in the subsequent reduction stage. An example of a suitable low temperature drying approach is provided in International Patent Publication No. WO 2005/028977.

The composite bodies or pellets are charged into an upright retort where the configuration is such that a reducing atmosphere is maintained at temperature. The retort is heated via an external heat source such that the bottom portion of the furnace surrounding the retort is brought to a steady state operating temperature. The configuration of the retort is such that the requirement for an external heat source is reduced or eliminated (depending on the exact mix of input materials) upon reaching steady state operating temperature, with the external heat being supplemented or replaced by process off-gas introduced to the combustion chamber.

As noted above, the adoption of the combination of the parameters in the process referred to herein delivers a predominantly hydrogen based reduction process at relatively low temperature, low residence time and with relatively low carbon emissions. It is also noted that the metal (e.g. iron) produced according to the process of the invention is of high purity and generally does not contain or contains only low levels of carbon in a form other than as elemental carbon. This low level of elemental carbon is traditionally only obtainable using chemical purification methods. Although some of the analysis in the Examples provided herein show varying levels of carbon, some of them quite high, it is important to note that the carbon is elemental and present in the retort residue. For example, iron will not dissolve carbon into solution until it is in molten form (i.e. at elevated temperatures of 1540 °C or above) such as experienced in Electric Arc Furnace treatment, which can be adopted as a follow-on treatment to the process of the invention.

Without wishing to be bound by theory the present inventors understand that key chemical reactions underpinning the process of the invention are as follows:
Hydrogen reactions below 570°C:
   Fe₃O₄ + 4H₂ → Fe + 4H₂O
   Fe₂O₃ + 3H₂ 2Fe + 3H₂O
Hydrogen reactions above 570°C:
   2Fe₂O₃ + H₂ → 2Fe₃O₄ + H₂O
   Fe₃O₄ + H₂ 3FeO + H₂O
   FeO + H₂ → Fe + H₂O
Carbon reactions:
   2C + 2O₂ → 2CO₂
   C + H₂O → CO + H₂
Water gas shift reaction (in the presence of catalyst such as Fe, Co or Ni):
   CO₂+ H₂ → CO + H₂O
   CO + H₂O → CO₂ + H₂
   CH₄+H₂O → CO₂+3H₂

The process reactions above take place across a broad, low temperature range from approximately 400°C through to 950°C.

Hydrogen is a strong reducing agent and is produced in the process at temperatures as low as 120°C, allowing for a lower process temperature than traditional carbothermal reduction processes. The hydrogen is produced via two primary routes: (a) catalytic decomposition of hydrocarbon gases, and; (b) catalytic cracking of water via the water-gas shift reaction, catalysed by iron or other metals.

The hydrogen reduction of iron oxide to iron produces an alpha phase iron in a crystal form. It is thought that the presence of this crystal phase iron catalyses the water-gas shift reaction.

The water-gas shift reaction (WGSR) describes the reaction of carbon monoxide and water vapour (H₂O) to form carbon dioxide and hydrogen (the mixture of carbon monoxide and hydrogen is known as water gas): CO + H₂O → CO₂ + H₂.

The operating temperature for the process can, for example be from about 400 °C to about 950 °C, such as from about 450 °C, 500 °C, 550 °C, 600 °C, 650 °C, 700 °C or about 750 °C up to about 950 °C. Preferably the operating temperature is in the range of from about 800 °C to about 920 °C, such as from about 820 °C to about 900 °C, from about 830 °C to about 880 °C, from about 840 °C to about 870 °C or about 850 °C or 860 °C. The operating temperature is the temperature of the heated region of the retort to which the composite pellets are conveyed. The temperature of the composite pellets will transition from initial ambient temperature to the operating temperature as they travel through the retort from an upper cooler region to the lower heated region of the retort.

The process may be conducted such that there is a residence time (the time period at which the composite bodies are exposed to conditions causing the efflux *of in situ* reducing gas) of from about 15 minutes to about 3 hours, such as from about 20 minutes to about 2.5 hours, from about 20 minutes to about 2 hours, from about 25 minutes to about 1.5 hours or from about 40 minutes to about 1 hour, depending on the composition of the input materials. Preferred residence times are about 20 minutes, about 25 minutes, about 30 minutes, about 35 minutes, about 40 minutes, about 45 minutes, about 1 hour, about 1.25 hours, about 1.5 hours, about 1.75 hours or about 2 hours.

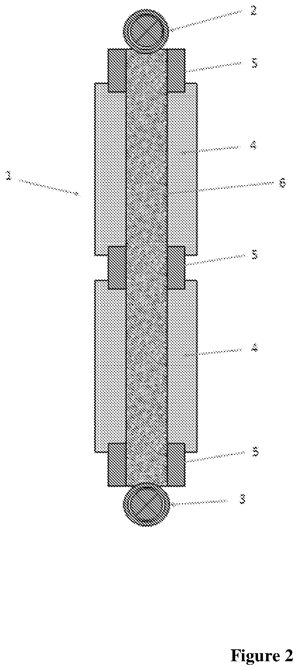

The retort 1 (as shown in Figure 2) is an upright and preferably generally vertical metallic tube, designed to house and contain the incoming composite bodies, sustain their heating to reaction temperatures, allow excess reaction gases to depart the retort tube under controlled conditions (to be recovered as appropriate and utilised as a fuel source if desired) and discharge products from the bottom.

The retort 1 should be produced from a material that is stable and will retain its mechanical properties at elevated temperature. For example, alloys of stainless steel such as Inconel 600^{™} and 253 MA^{™} (alloys of Fe, Co and Ni) are suitable.

Infeed 2 and discharge 3 devices provide substantial isolation of the materials 6 in the retort 1. They prevent free flow of gases into or out of the retort 1.

Gas extraction zones 5 are spaces (slots / concentric gaps / holes) in the retort 1 extending around its circumference, which allow the exit of gases from the retort 1, under influence from the pressure (or vacuum) applied by external gas handling equipment (not shown). The gas extraction zones 5 are designed to prevent the exit or loss of composite bodies 6 of feed material along with the gases (either in the form of composite bodies or fragments thereof).

The heating zones 4 are jacketed, indirect heating areas which increase the temperature of the materials within the retort 1. Heated gases flow through these zones, transferring energy to the composite bodies 6 via conduction and radiation heat transfer mechanisms, via the retort 1 wall. The gases are the combusted products of the excess reaction gases extracted from the retort 1, having been mixed with small amounts of excess air and combusted.

Throughput, the flow of composite bodies 6 through the retort is controlled by adjustment of the discharge 3 and infeed 2 device rotational speeds. Retort 1 temperatures are controlled by the flow of combusted gases to the heating zones 4. Gas flow direction within the retort 1 is controlled by the application of differential pressures between the gas extraction zones 5. Reduction of the metallic oxides to metal is controlled by the time / temperature exposure of the composite bodies 6, as well as the specific ratios of reactants and catalyst materials within the feed pellets. Reduction is also influenced by exposure to excess reactant gases, and the retort 1 gas flow direction.

Retort 1 life is significantly influenced by the temperature and methodology of operation, by design features of the retort system, and materials of construction selected.

As shown in the flowchart of Figure 1, after being subjected to the HydroMOR method according to the present invention the metal containing composite bodies produced can be subjected to further conventional processing, for example to purify the metal desired to be obtained. For example, in the case of iron from iron oxides the composite bodies can be subjected to Electric Arc Furnace (EAF) treatment to produce liquid steel, which can then be further subjected to billet, coil, wire or sheet casting treatments, for example, to produce a metal product in the desired form. Desirably, the composite bodies produced in the methods of the present invention are subjected to further treatments (where heating is involved) immediately at the conclusion of the process of the invention, before cooling, in order to benefit from the latent heat of the composite bodies at the completion of the inventive process.

The invention will now be described by way of example only, with reference to the following non-limiting examples. Although the examples relate primarily to the reduction of iron oxides to iron, it is to be understood that the examples are illustrative only and that oxides of other metals can be processed in the same manner.

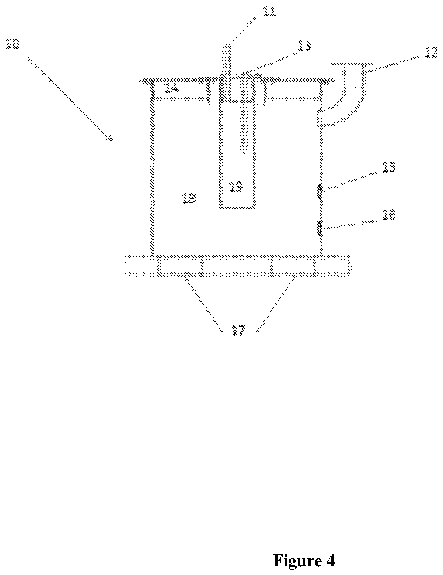

In the Examples a bench scale retort apparatus 10 has been used, a side cross sectional diagram of which is shown in Figure 4. In Figure 4 the apparatus 10 comprises an internal retort tube 19 into which a charge of carbonaceous material / metal oxide comprising material composite bodies is inserted. The apparatus is conveniently located on a platform that includes lifting points for forklift tines 17. The apparatus 10 has a main heating chamber 18, above which is located a void filled with refractory 14. The heating chamber 18 includes an inlet for a gas burner 16 and an alternate burner inlet 15. There is a main exhaust 12 located at an upper region of the heating chamber 18. Leading from an upper region of the internal retort tube 19 there is a main gas outlet 11 and a thermocouple access port 13. The apparatus 10 will appropriately be produced from a material that is stable and retains its mechanical properties at elevated temperature. For example stainless steel alloys such as Inconel 600^{™} and 253 MA^{™} (alloys of Fe, Co and Ni) are suitable.

### Examples

### Example 1 - Conduct of HydroMOR process at operating temperature of 850°C and 1 hour residence time using Victorian Millscale and Maddingley lignite in a 50:50 ratio

### Hypothesis

The HydroMOR process, involving the in-situ gasification of composite pellets, achieves metal oxide reduction at temperatures below the traditional 850°C to 1100°C such that a pellet containing direct reduced iron is achieved.

### Variables

Victorian Millscale and Maddingley lignite have been used in a 50:50 dry mix ratio.

Repeat tests will be conducted at 1hr residence time.

Target operating temperature to be set at 850 degrees.

### Background Theory

In brief HydroMOR provides a highly reductive atmosphere which enables the reduction of metals from mineral and their oxides. To date the process has been shown to successfully reduce iron from several varying feed materials (Iron ore, Nickel Tailings, Ilmenite).

### Apparatus

1. Bench scale retort apparatus, as depicted in Figure 4.
2. Thermocouple data logger.
3. Induction furnace (10kg).

### Input materials

Maddingley Lignite - Composition Analysis:

| M% ar | PROXIMATE ANALYSIS (%db) | | | ULTIMATE ANALYSIS (%db) | | | | | Calorific Value (MJ/kg) | | |
|---|---|---|---|---|---|---|---|---|---|---|---|
| | Ash | Volatile Matter | Fixed Carbon | C | H | N | S | O | Gross Dry | Gross Wet | Net Wet |
| 55.40 | 12.90 | 45.5 | 41.6 | 55.00 | 4.10 | 0.44 | 3.74 | 23.8 | 21.9 | 9.8 | 8.1 |

Millscale Metal Oxide - Composition Analysis:

| Si | Al | Fe | Ca | Mg | Na | K | Mn | Ti | P | Zn | Cu | Cr | Mo | Ni | Other |
|---|---|---|---|---|---|---|---|---|---|---|---|---|---|---|---|
| 0.53 | 0.05 | 63.2 | - | - | - | - | 0.46 | 0.05 | 0.05 | - | 0.14 | 0.07 | 0.01 | - | 4.63 |

### Procedure

### Sample testing

Composite pellet mixed to 50% Millscale, 50% Lignite on a dry basis

### Charge

- 7 kg
- 4.29% moisture

### Test Description

- Start temperature - 9°C
- Residence time - 60mins
- Test duration - 160 min
- Target residence temperature - 850 °C
- Finish temperature - 850°C

### Steps

1. Calculate material inputs to match required experimental input ratios.
2. Prepare materials. Crush and screen all inputs to 100% passing 5mm. Mix thoroughly and add water to establish the desired consistency to form pellets.
3. Extrude pellets and store for drying
4. Check pellets 24-48hrs later once appropriate moisture level is achieved (<5%) experiment can continue
5. Charge, assemble and seal test retort. Testing charge added.
6. Safety checks.
7. Set controls and data logger.
8. Ignite gas burner.
9. Run test - heat to temperature set point (850°C).
10. Hold temp at set point 850°C for nominated residence time (1hr).
11. Turn off burner.
12. Allow to cool to ambient temperature, 5-10hrs (overnight).
13. Disassemble retort.
14. Weigh product output.
15. Take sample for lab analysis
16. Melt remainder of product pellets in induction furnace, remove slag & gangue materials.
17. Take metal sample for analysis.

### Output Results

### Test 1

### Mass Balance

7.00 kg in - 4.30 kg out - 64.4% mass recovery (reduced pellets)

### Analysis

### Reduced Pellets

| **Output Analysis (%)** | | | | | | | | | | | | | | | | |
|---|---|---|---|---|---|---|---|---|---|---|---|---|---|---|---|---|
| SiO₂ | Al₂O₃ | Fe(T) | CaO | MgO | Na₂O | K₂O | MnO | TiO₂ | P₂O₅. | ZnO | CuO | Cr₂O₃ | NiO | MoO₃ | C | Fe⁰ |
| 2.17 | 1.2 | 78.1 | 11.7 | 2.42 | .12 | .03 | .46 | .04 | .05 | - | .15 | .07 | .03 | .02 | .27 | 75.7 |

Note that in the above output analysis and throughout this document Fe(T) signifies total iron included in the sample and Fe0 signifies zero valence or metallic iron.

### Metal

| **Output Ferrous Analysis (%)** | | | | | | | | | | | | | |
|---|---|---|---|---|---|---|---|---|---|---|---|---|---|
| Fe | C | Mn | Si | S | P | Ni | Cr | Mo | Cu | V | Nb | Ti | Al |
| 98.98 | 0.02 | 0.02 | 0.15 | 0.54 | 0.03 | 0.04 | 0.01 | 0.01 | 0.15 | - | - | 0.01 | 0.04 |

### Discussion & Conclusion

The analysis shows a carbon value of 0.02% - this low level of carbon in primary iron is unusual and the implications are important. To obtain similar levels in industry currently the material is produced chemically in laboratory conditions. The chemically produced iron is mostly used for analytical standards and is extremely expensive. It is also quite reactive in certain conditions and makes an ideal catalyst in applications such as gas generation.

The possibility of a low cost route to chemically pure Alpha Iron is a significant value add to the HydroMOR process.

This test was particularly illustrative as it was conducted on the original Matmor pellet mix and so was able to be used as a comparison between the results of earlier test work and the results obtained using the new technique.

### Example 2 - Conduct of HydroMOR process at operating temperature of 870°C using Indian Iron ore slimes and Indian lignite in an 80:20 ratio (dry basis) with residence time of 1.5 or 2 hours

### Hypothesis

The HydroMOR process, involving the *in-situ* gasification of composite pellets, achieves metal oxide reduction at temperatures below the traditional 850°C to 1100°C such that a pellet containing direct reduced iron is achieved. This test is designed to measure changes in output resulting from variations in residence time.

### Variables

Indian Iron ore slimes and Indian lignite have been used in an 80:20 dry mix ratio.

Temperature is set at 870 °C.

Residence time is the interrogated variable. Repeat tests will be conducted at 1.5 hrs and 2 hrs residence time.

### Background Theory

HydroMOR provides a highly reductive atmosphere which enables the reduction of metals from mineral and their oxides. To date the process has been displayed to successfully reduce iron from several varying feed materials (Iron ore, Nickel Tailings, Ilmenite). This test is designed to evaluate the target operation window for test plant operating parameters.

### Apparatus

1. Bench scale retort apparatus.
2. Thermocouple data logger

### Inputs

Indian Lignite - Composition Analysis:

| M% ar | PROXIMATE ANALYSIS | | | ULTIMATE ANALYSIS (%db) | | | | | Calorific Value (MJ/kg) | | |
|---|---|---|---|---|---|---|---|---|---|---|---|
| | Ash | Volatile | Fixed | C | H | N | S | O | Gross Dry | Gross Wet | Net Wet |
| 51.40 | 5.40 | 51.00 | 43.70 | 67.30 | 5.00 | 0.65 | 1.95 | 19.80 | 26.60 | 12.90 | 11.30 |

| ASH ANALYSIS (%db) | | | | | | | | |
|---|---|---|---|---|---|---|---|---|
| SiO2 | A1203 | Fe₂O₃ | TiO2 | K2O | MgO | Na₂O | CaO | SO3 |
| 35.70 | 15.70 | 4.20 | 0.79 | 0.15 | 4.50 | 0.54 | 16.30 | 20.90 |

Indian Iron ore slimes Metal Oxide - Composition Analysis:

| Fe(T) | Fe₂O₃ | SiO2 | Al₂O₃ | LOI | P₂O₅ | s | CaO | MgO | Na₂O | K2O | MnO | TiO2 | ZnO | CuO | Cr2O3 | MoO3 | C |
|---|---|---|---|---|---|---|---|---|---|---|---|---|---|---|---|---|---|
| 61.34 | 87.7 | 8.07 | 1.49 | 2.34 | 0.07 | 0.01 | 0.07 | 0.03 | 0.09 | 0.04 | 0;03 | 0.1 | 0.01 | 0.01 | 0.01 | 0.01 | 0.0 |

### Testing Method

1. Calculate material inputs.
2. Prepare materials. Crush and screen all inputs to 100% passing 5mm. Mix thoroughly and add water to establish the desired consistency to form pellets.
3. Extrude pellets and store for drying.
4. Check pellets 24-48hrs later once appropriate moisture level is achieved (<5%) experiment can continue
5. Charge, assemble and seal test retort. Testing charge weighed at 8kg,
6. Safety checks.
7. Set controls and data logger.
8. Ignite gas burner.
9. Run test - heat to temperature set point (860°C).
10. Hold temp at set point 860°C for nominated residence time (1.5 & 2hrs).
11. Turn off burner.
12. Allow to cool to ambient temperature, 5-10hrs (overnight).
13. Disassemble retort.
14. Weigh product output.
15. Take sample for lab analysis.
16. Store product onsite in sample jars.
17. Discard excess product pellets.

### Procedure

### Sample testing

### Composite Pellet mix calculation

### Test 1

| **Input** | Metal | *Dry* | *Moisture* | Lignite | *Dry* | *Moisture* | Flux | Total |
|---|---|---|---|---|---|---|---|---|
| Input (wb) | 25.870 | 25.870 | 0.00% | 12.18 | 6.468 | 46.90% | 1.960 | 40.010 |
| Output | 25.870 | 25.870 | 0% | 6.468 | 6.468 | 0% | 1.960 | 34.298 |

### Charge

- 8 kg
- 0.78% moisture

### Test Description

- Start temperature - 34°C
- Residence time - 90 min
- Test duration - 150 mins(approx.)
- Target residence temp - 850 °C
- Final temperature - 874°C

### Output Results

### Test 1

### Mass Balance

8.00 kg in - 5.00 kg out - 62% mass recovery

### Analysis

| | **Output Analysis (%)** | | | | | | | | | | | | | | | |
|---|---|---|---|---|---|---|---|---|---|---|---|---|---|---|---|---|
| SiO₂ | Al₂O₃ | Fe(T) | CaO | MgO | Na₂O | K₂O | MnO | TiO₂ | P₂O₅ | ZnO | CuO | Cr2O3 | NiO | MoO₃ | C | Fe⁰ |
| 9.68 | 2.09 | 66.5 | .35 | .11 | .1 | .17 | .09 | 1.99 | .10 | .04 | .04 | .07 | .03 | .07 | 7.22 | 35.2 |

### Test 2

| **Input** | Metal Oxide | *Dry* | *Moisture* | Lignite | *Dry* | *Moisture* | Flux | Total |
|---|---|---|---|---|---|---|---|---|
| Input (wb) | 25.870 | 25.870 | 0.00% | 12.180 | 6.468 | 46.90% | 1.960 | )40.010 |
| Output (wt db) | 25.870 | 25.870 | 0% | 6.468 | 6.468 | 0% | 1.960 | 34.298 |

### Charge

- 8 kg
- 3.06% moisture

### Test Description

- Start temperature - 11°C
- Residence time - 120 mins
- Target residence temperature - 870 °C
- Test duration - 240 mins
- Finish temperature - 868°C

### Output Results

### Test 2

### Mass Balance

8.00 kg in - 4.70 kg out - 58% mass recovery

### Analysis

| | **Output Analysis (%)** | | | | | | | | | | | | | | | |
|---|---|---|---|---|---|---|---|---|---|---|---|---|---|---|---|---|
| SiO₂ | Al₂O₃ | Fe(T) | CaO | MgO | Na₂O | K₂O | MnO | TiO₂ | P₂O₅ | ZnO | CuO | Cr2O3 | NiO | MoO₃ | C | Fe° |
| 10.8 | 2.39 | 77.3 | .96 | .27 | .06 | .15 | .12 | 2.13 | .21 | .04 | .05 | .04 | .02 | .12 | .65 | 60.4 |

### Discussion & Conclusion

This repeat test shows a large variation in Fe recovery to metal in these unoptimized formulations and testing regimes. However, both Example 2 tests display acceptable levels of recovery and display the amenability of Fe recovery to metal via the HydroMOR process from the Iron Ore Slimes sample material.

### Example 3 - Conduct of HydroMOR process at operating temperature of 870°C and 1 hour residence time using Millscale and Indianlignite in an 80:20 ratio

### Hypothesis

The HydroMOR process, involving the in-situ gasification of composite pellets, achieves metal oxide reduction at temperatures below the traditional 850°C to 1100°C such that a pellet containing direct reduced iron is achieved. This test is designed to measure changes in output resulting from variations in temperature, residence time and input composition.

### Variables Millscale and lignite have been used in an 80:20 dry mix ratio.

Repeat tests will be conducted at 1hr residence time.

Target operating temperature to be set at 870 degrees.

### Background Theory

HydroMOR provides a highly reductive atmosphere which enables the reduction of metals from mineral and their oxides. To date the process has been shown to successfully reduce iron from several varying feed materials (Iron ore, Nickel Tailings, Ilmenite). This test is designed to evaluate the target operation window and input material ratio for test plant operating parameters.

### Apparatus

1. Bench scale retort apparatus.
2. Thermocouple data logger

### Inputs

Lignite - Composition analysis:

| M% ar | PROXIMATE ANALYSIS (%db) | | | ULTIMATE ANALYSIS (%db) | | | | | Calorific Value (MJ/kg) | | |
|---|---|---|---|---|---|---|---|---|---|---|---|
| | Ash | Volatile Matter | Fixed Carbon | C | H | N | S | O | Gross Dry | Gross Wet | Net Wet |
| 51.40 | 5.40 | 51.00 | 43.70 | 67.30 | 5.00 | 0.65 | 1.95 | 19.80 | 26.60 | 12.90 | 11.30 |

| ASH ANALYSIS (%db) | | | | | | | | |
|---|---|---|---|---|---|---|---|---|
| SiO2 | A1203 | Fe₂O₃ | TiO2 | K2O | MgO | Na₂O | CaO | SO3 |
| 35.70 | 15.70 | 4.20 | 0.79 | 0.15 | 4.50 | 0.54 | 16.30 | 20.90 |

Millscale Metal Oxide - Composition analysis: Si Al Fe Ca Mg Na K Mn Ti P Zn Cu Cr Mo Ni Other 0.53 0.05 63.2 - - - - 0.46 0.05 0.05 - 0.14 0.07 0.01 - 4.63

### Procedure

### Sample testing

Composite Pellet mixed to 80% Iron ore 20% Lignite on a dry basis

### Charge

- 8 kg
- 3.10% moisture

### Test Description

- Start temperature - 28°C
- Residence time - 60mins
- Target residence temp - 870 °C
- Test duration - 130 min
- Finish temperature - 870°C

### Experimental Method

1. Calculate material inputs. To match required experimental input ratios.
2. Prepare materials. Crush and screen all inputs to 100% passing 5mm. Mix thoroughly and add water to establish the desired consistency to form pellets.
3. Extrude pellets and store for drying.
4. Check pellets 24-48hrs later. Once appropriate moisture level is achieved (<5%) experiment can continue.
5. Charge, assemble and seal test retort. Testing charge weighed at 8kg.
6. Safety checks.
7. Set controls and data logger.
8. Ignite gas burner.
9. Run test - heat to temperature set point (870°C).
10. Hold temperature at set point 870°C for nominated residence time (1hr).
11. Turn off burner.
12. Allow to cool to ambient temperature, 5-10hrs (overnight).
13. Disassemble retort.
14. Weigh product output.
15. Take sample for lab analysis.
16. Store product onsite in sample jars.
17. Discard excess product pellets.

### Output Results

### Mass Balance

8.00 kg in - 5.60 kg out - 70% mass recovery

### Analysis - Reduced pellets

| | **Output Analysis (%)** | | | | | | | | | | | | | | | |
|---|---|---|---|---|---|---|---|---|---|---|---|---|---|---|---|---|
| SiO₂ | Al₂O₃ | Fe(T) | CaO | MgO | Na₂O | K₂O | MnO | TiO2 | P₂O₅ | ZnO | CuO | Cr2O3 | NiO | MoO₃ | C | Fe⁰ |
| 12.6 | 3.22 | 72.2 | 3.34 | .82 | .79 | .37 | .53 | .82 | .18 | .01 | .18 | .07 | .03 | .01 | .09 | 61.1 |

| | | | | | | | | | | | | | | | | |
|---|---|---|---|---|---|---|---|---|---|---|---|---|---|---|---|---|
| Fe recovery to metal estimated at 78% | | | | | | | | | | | | | | | | |

### Discussion & Conclusions

The success of this test in producing a high Fe recovery with an extremely low carbon content presents the possibility of an application for the HydroMOR process in the production of high purity Alpha phase iron. Note that these tests represent unoptimized formulations and testing regimes.

This testing was conducted at a pellet mix ratio of 80:20 which appears to strike the balance between producing reductive potential and minimising the residual carbon content of the product.

### Example 4 - Conduct of HydroMOR process at operating temperature of 900°C and 1 hour residence time using ilmenite mineral sands and Indian lignite in an 80:20 ratio

### Hypothesis

The Hydromor process, involving the *in-situ* gasification of composite pellets, achieves metal oxide reduction at temperatures below the traditional 850°C to 1100°C such that a pellet containing direct reduced iron is achieved. This test is designed to measure changes in output resulting from variations in temperature, residence time and input composition.

### Variables

Ilmenite and Lignite have been used in an 80:20 dry mix ratio.

Repeat tests will be conducted at 1hr residence time.

Target operating temperature to be set at 900 degrees.

### Background Theory

HydroMOR provides a highly reductive atmosphere which enables the reduction of metals from mineral and their oxides. To date the process has been displayed to successfully reduce iron from several varying feed materials (Iron ore, Nickel Tailings, Ilmenite). This test will assess the amenability of iron reduction from ilmenite using the HydroMOR process.

### Apparatus

1. Bench scale retort apparatus.
2. Thermocouple data logger

### Inputs

Lignite - Composition Analysis:

| M% ar | PROXIMATE ANALYSIS (%db) | | | ULTIMATE ANALYSIS (%db) | | | | | Calorific Value (MJ/kg) | | |
|---|---|---|---|---|---|---|---|---|---|---|---|
| | Ash | Volatile Matter | Fixed Carbon | C | H | N | S | O | Gross Dry | Gross Wet | Net Wet |
| 51.40 | 5.40 | 51.00 | 43.70 | 67.30 | 5.00 | 0.65 | 1.95 | 19.80 | 26.60 | 12.90 | 11.30 |

| ASH ANALYSIS (%db) | | | | | | | | |
|---|---|---|---|---|---|---|---|---|
| SiO2 | A1203 | Fe₂O₃ | TiO2 | K2O | MgO | Na₂O | CaO | SO3 |
| 35.70 | 15.70 | 4.20 | 0.79 | 0.15 | 4.50 | 0.54 | 16.30 | 20.90 |

Ilmenite Metal Oxide - Composition Analysis:

| Fe(T) | FeO | SiO₂ | Al₂O₃ | LOI | P₂O₅ | CaO | MgO | Na₂O | K₂O | MnO | TiO₂ | ZnO | CuO | Cr2O3 | MoO₃ | C |
|---|---|---|---|---|---|---|---|---|---|---|---|---|---|---|---|---|
| 17.10 | 22.00 | 12.00 | 17.40 | 4.63 | 0.01 | 3.51 | 1.39 | 0.25 | 0.20 | 1.16 | 35.00 | 0.01 | 0.04 | 0.68 | - | 0.80 |

### Procedure

### Sample testing

Composite Pellet mixed to 80% Ilmenite 20% Lignite on a dry basis

### Charge

- 8 kg
- 1.05% moisture

### Test Description

- Start temperature - 24°C
- Residence time - 60mins
- Test duration - 120 min
- Residence temperature - 900°C
- Finish temperature - 900°C

### Experimental Method

1. Calculate material inputs. To match required experimental input ratios.
2. Prepare materials. Crush and screen all inputs to 100% passing 5mm. Mix thoroughly and add water to establish the desired consistency to form pellets.
3. Extrude pellets and store for drying.
4. Check pellets 24-48hrs later once appropriate moisture level is achieved (<5%) experiment can continue.
5. Charge, assemble and seal test retort. Testing charge weighed at 8kg,
6. Safety checks.
7. Set controls and data logger.
8. Ignite gas burner.
9. Run test - heat to temperature set point (900°C).
10. Hold temperature at set point 900°C for nominated residence time (1hr).
11. Turn off burner.
12. Allow to cool to ambient temperature, 5-10hrs (overnight).
13. Disassemble retort.
14. Weigh product output.
15. Take sample for lab analysis, including X-ray diffraction analysis..
16. Collect sample for magnetic separation.
17. Conduct magnetic separation of roasted ilmenite on bench continuous magnetic separator.
18. Store product onsite in sample jars.
19. Discard excess product pellets.

### Output Results

### Mass Balance

8.00 kg In - 6.65 kg Out - 83% Mass Recovery

### X-Ray Diffraction (XRD) Analysis Report

### (performed on raw output, not magnetically concentrated sample)

Measurement Conditions:

| | |
|---|---|
| File name | S:\JZ\xxxxxxx.xrdml |
| Measurement Date / Time | 25/05/2016 10:01:49 AM |
| Start Position [°2Th.] | 4.9983 |
| End Position [°2Th.] | 89.9923 |
| Step Size [°2Th.] | 0.0070 |
| Specimen Length [mm] | 10.00 |
| Anode Material | Cu |
| K-Alpha1 [Å] | 1.54060 |
| K-Alpha2 [Å] | 1.54443 |
| K-Beta [Å] | 1.39225 |
| Generator Settings | 40 mA, 40 kV |
| Spinning | Yes |

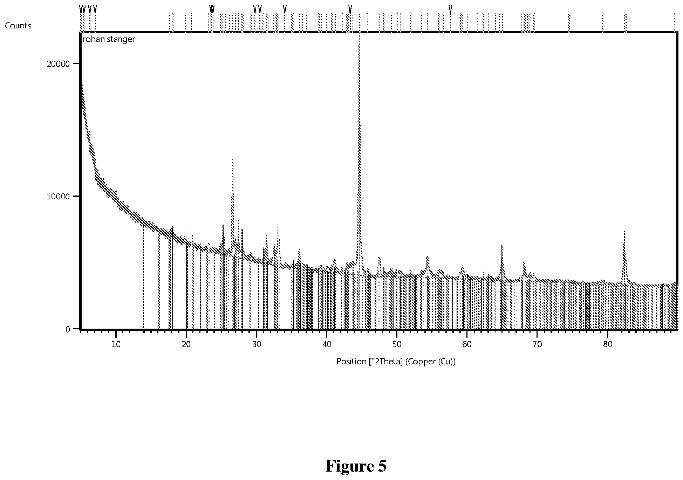

The XRD sample pattern obtained from the sample analysis is shown as Figure 5.

Matched Phases:

| Ref. Code | Compound Name | Chemical Formula | Mineral Name |
|---|---|---|---|
| 04-003-1504 | Iron | Fe | |
| 01-077-9496 | Calcium Titanium Oxide | Ca ( Ti O3 ) | |
| 01-079-6031 | Titanium Oxide | Ti O2 | Rutile, syn |
| 04-007-6628 | Magnesium Titanium Oxide | Mg0.45 Ti2.55 O5 | |
| 01-070-3755 | Silicon Oxide | Si O2 | Quartz |
| 04-017-8634 | Calcium Carbonate | Ca ( C O3 ) | Vaterite, syn |
| 04-014-4686 | Calcium Magnesium Aluminum | Ca2 MgO.54 | Akermanite, |
| | Silicon Oxide | A10.92 Si1.54 O7 | aluminian, syn |
| 00-022-0714 | Magnesium Silicate | Mg Si O3 | Enstatite, ordered |

### Discussion & Conclusion

No oxides of iron were detected in the reduced product sample. All contained Fe species were therefore reduced to metallic state. This test highlights the potential for the reduction of Fe from ilmenite, which will allow for lower cost recovery of the Ti.

### Example 5 - Conduct of HydroMOR process at operating temperatures of 500, 750, 860 and 920°C and residence times of 30 mins to 3 hrs using Mill scale and Maddingley lignite in a 75:25 ratio

### Hypothesis

The HydroMOR process involves the *in-situ* gasification of composite pellets, achieves iron reduction at temperatures below the traditional temperature range. A pellet largely comprising of direct reduced iron is achieved. This test was designed to indicate the optimum operating window for the HydroMOR test plant. Changes in metal recovery and output resulting from variations in temperature and residence time were evaluated.

### Variables

Mill scale and Maddingley lignite have been used in a 75:25 dry mix ratio.

Variable residence times will be tested from 30 mins to 3 hrs.

Variable residence temperatures will be tested - 500, 750, 860 and 920°C.

### Background Theory

HydroMOR provides a highly reductive atmosphere which enables the reduction of metals from their oxides. To date the process has been displayed to successfully reduce iron from several varying feed materials (Iron ore, Nickel Tailings, Ilmenite). This test is designed to evaluate the target operation window for test plant operating parameters.

### Apparatus

1. Bench scale retort apparatus.
2. Thermocouple data logger

### Inputs

Maddingley Lignite I Composition analysis:

| M% ar | PROXIMATE ANALYSIS (%db) | | | ULTIMATE ANALYSIS (%db) | | | | | Calorific Value (MJ/kg) | | |
|---|---|---|---|---|---|---|---|---|---|---|---|
| | Ash | Volatile Matter | Fixed Carbon | C | H | N | S | O | Gross Dry | Gross Wet | Net Wet |
| 51.4 | 5.40 | 51.00 | 43.70 | 67.30 | 5.00 | 0.65 | 1.95 | 19.80 | 26.60 | 12.90 | 11.30 |

| ASH ANALYSIS (%db) | | | | | | | | |
|---|---|---|---|---|---|---|---|---|
| SiO2 | A1203 | Fe₂O₃ | TiO2 | K2O | MgO | Na₂O | CaO | SO3 |
| 35.70 | 15.70 | 4.20 | 0.79 | 0.15 | 4.50 | 0.54 | 16.30 | 20.90 |

Maddingley brown coal is a form of lignite that is geologically "young" and has relatively high levels of organic compounds and humic acid in its structure. This makes it suitable for use in the fertiliser industry.

The levels of organic compounds also provide high levels of hydrogen which can be liberated from the structures under the right conditions.

The hydrogen liberated from Maddingley coal is adequate for the HydroMOR process when using ferrous ores and scales but it has the drawback that it also contains high levels of ferrous sulphide and at times levels of boron compounds are present in specific geological areas, which are considered as contaminants in metal production.

Mill Scale metal oxide - Composition Analysis:

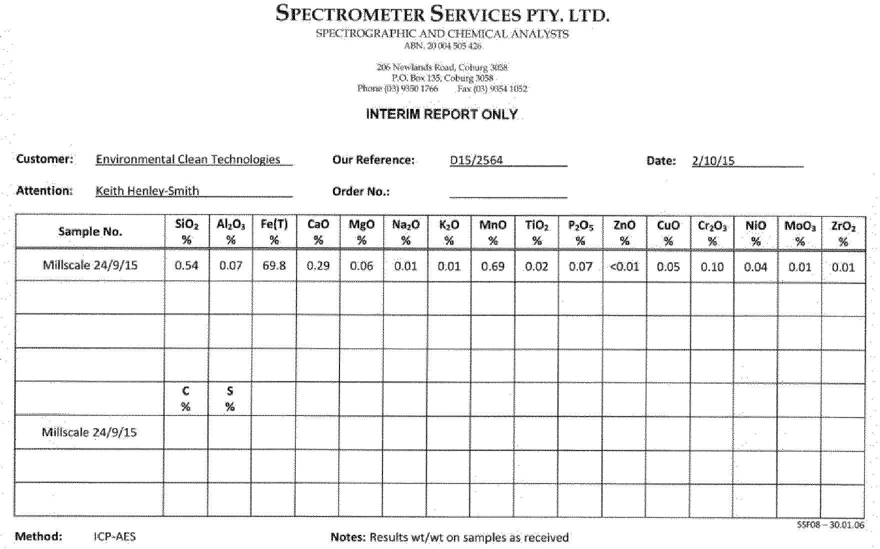

This material was sourced differently from prior samples, and has been through at least three re- heating processes, resulting in a structure is not as fine or dense as other mill scales used. There are also some contaminants visible in the product which influence the mixing process.

### Procedure

For this test series, premixed Matmor test pellets were used. These pellets were mixed at a ratio of 75% mill-scale and 25% Maddingley lignite. The pellets had been in storage for roughly 6 months. The trial used these pellets as a relatively large tonnage was available. The benefit of this is that we were reasonably assured that the mixing of feed materials is consistent over the large volume, which is harder to control with small batches.
1. Charge, assemble and seal test retort. Testing charge is normally 8-10kg.
2. Safety checks.
3. Set controls and data logger.
4. Ignite gas burner.
5. Run test - heat to temperature set point.
6. Hold temperature at set point for nominated residence time.
7. Turn off burner.
8. Allow to cool to ambient temperature, 5-10hrs (overnight).
9. Disassemble retort.
10. Weigh product output.
11. Take sample for lab analysis.
12. Store product onsite in sample jars.
13. Discard excess product pellets.

A series of tests were carried out across a range of time and temperature settings. No other parameters were substantially changed.

### Results

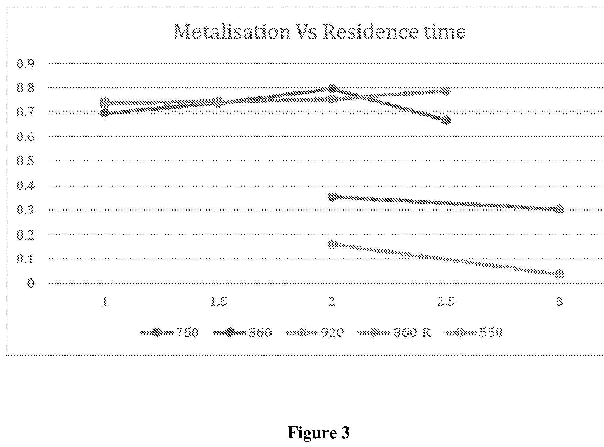

The iron recovery results from these tests are depicted graphically in Figure 3.

### Discussion & Conclusions

It is particularly interesting that the test work completed displayed a large variation in metal recovery with temperature, with an observed optimum recovery occurring in the 860- 920°C temperature range.

A slightly counter intuitive result is the fact that there does not seem to be anywhere near as significant a recovery gain from extending residence time. There may be a suggestion in the data that extending residence time could be slightly detrimental to the recovery of Fe to metal.

## Claims

1. A method of reducing metal oxide to metal in a continuous process comprising:
a. continuously introducing composite bodies comprising low rank carbonaceous material having moisture content of from about 30% to about 70% and metal oxide containing material that are in intimate contact and in a dry mix ratio of from about 1:2 to about 1:10 by weight to an upper region of an upright retort;
b. conveying said bodies from said upper region to a heated lower region of said retort wherein said composite bodies are exposed to increasing temperature of up to about 950°C and wherein said composite bodies are exposed to reducing gas generated *in situ* for a period of from about 15 minutes to about 3 hours to thereby produce a reduced metal containing product; and
c. continuously removing the reduced metal containing product from a lower region of the retort.

2. The method according to claim 1 wherein the composite bodies comprising low rank carbonaceous material and metal oxide are produced by mixing / attritioning particulate low rank carbonaceous material and metal oxide containing material with optional addition of water to produce a plastic mass, forming moist composite bodies and drying to produce dried composite bodies.

3. The method according to claim 2 wherein the metal oxide containing material is a metal oxide containing mineral ore or a metal oxide containing material that is a product or by-product of an industrial process.

4. The method of claim 2 wherein the moisture content of said dried composite bodies is up to about 15 % w/w.

5. The method according to any one of claims 2 to 4 wherein the forming of moist composite bodies is by extrusion and the composite bodies are pellets.

6. The method according to any one of claims 1 to 5 wherein the dry mix ratio of low rank carbonaceous material to metal oxide containing material is from about 1:3 to about 1:9 by weight, such as about 1:5 by weight.

7. The method according to any one of claims 1 to 6 wherein the low rank carbonaceous material is lignite or sub-bituminous coal.

8. The method according to any one of claims 1 to 6 wherein the low rank carbonaceous material is peat.

9. The method according to any one of claims 1 to 8 wherein the metal oxide containing material comprises one or more of ferrous oxide (FeO), hematite (Fe₂O₃), magnetite (Fe₃O₄), chromite (FeCr₂O₄),magnesiochromite (MgCr₂O₄), ilmenite (FeO.TiO₂), manganese ore (Mn₂O₃) and limonite (Fe.Ni)O(OH). H₂O.

10. The method according to any one of claims 1 to 9 wherein all reducing gas is atmospheric or produced *in situ.*

11. The method according to any one of claims 1 to 10 wherein said composite bodies are exposed to reducing gas generated *in situ* for a period of from about 20 minutes to about 2 hours.

12. The method according to any one of claims 1 to 11 wherein the reducing gas comprises gases selected from one or more of C₁ - C₁₀ hydrocarbon (such as C₁ - C₆ hydrocarbon), H₂, CO, CO₂ and H₂O.

13. The method according to any one of claims 1 to 12 wherein metal oxide reduction is primarily H₂ gas reduction.

14. The method according to any one of claims 1 to 13 wherein metal oxide reduction occurs within the composite bodies due to reducing gas evolved within the composite bodies.

## Patentansprüche

1. Verfahren zum Reduzieren von Metalloxid zu Metall in einem kontinuierlichen Prozess, umfassend:
a. kontinuierliches Einführen von Verbundkörpern, die niederwertiges kohlenstoffhaltiges Material, das einen Feuchtigkeitsgehalt von etwa 30 % bis etwa 70 % aufweist, und metalloxidhaltiges Material umfassen, die in engem Kontakt stehen und in einem Trockenmischungsverhältnis von etwa 1:2 bis etwa 1:10 bezogen auf das Gewicht vorhanden sind, in einen oberen Bereich einer stehenden Retorte;
b. Befördern der Körper von dem oberen Bereich zu einem erhitzten unteren Bereich der Retorte, wobei die Verbundkörper einer ansteigenden Temperatur von bis zu etwa 950 °C ausgesetzt werden und wobei die Verbundkörper einem *in situ* erzeugten Reduktionsgas für eine Dauer von etwa 15 Minuten bis etwa 3 Stunden ausgesetzt werden, um dadurch ein reduziertes metallhaltiges Produkt herzustellen; und
c. kontinuierliches Entfernen des reduzierten metallhaltigen Produkts aus einem unteren Bereich der Retorte.

2. Verfahren nach Anspruch 1, wobei die Verbundkörper, die niederwertiges kohlenstoffhaltiges Material und Metalloxid umfassen, hergestellt werden durch Mischen/Zerreiben von partikulärem niederwertigem kohlenstoffhaltigem Material und metalloxidhaltigem Material mit optionaler Zugabe von Wasser, um eine plastische Masse herzustellen, Ausbilden feuchter Verbundkörper und Trocknen, um getrocknete Verbundkörper herzustellen.

3. Verfahren nach Anspruch 2, wobei das metalloxidhaltige Material ein metalloxidhaltiges Mineralerz oder ein metalloxidhaltiges Material ist, das ein Produkt oder Nebenprodukt eines industriellen Prozesses ist.

4. Verfahren nach Anspruch 2, wobei der Feuchtigkeitsgehalt der getrockneten Verbundkörper bis zu etwa 15 Gew.-% beträgt.

5. Verfahren nach einem der Ansprüche 2 bis 4, wobei das Ausbilden von feuchten Verbundkörpern durch Extrusion erfolgt und die Verbundkörper Pellets sind.

6. Verfahren nach einem der Ansprüche 1 bis 5, wobei das Trockenmischungsverhältnis von niederwertigem kohlenstoffhaltigem Material zu metalloxidhaltigem Material etwa 1:3 bis etwa 1:9, bezogen auf das Gewicht, wie etwa 1:5, bezogen auf das Gewicht, ist.

7. Verfahren nach einem der Ansprüche 1 bis 6, wobei das niederwertige kohlenstoffhaltige Material Lignit oder subbituminöse Kohle ist.

8. Verfahren nach einem der Ansprüche 1 bis 6, wobei das niederwertige kohlenstoffhaltige Material Torf ist.

9. Verfahren nach einem der Ansprüche 1 bis 8, wobei das metalloxidhaltige Material eines oder mehrere von Eisenoxid (FeO), Hämatit (Fe₂O₃), Magnetit (Fe₃O₄), Chromit (FeCr₂O₄), Magnesiochromit (MgCr₂O₄), Ilmenit (FeO.TiO₂), Manganerz (Mn₂O₃) und Limonit (Fe.Ni)O(OH). H₂Oumfasst.

10. Verfahren nach einem der Ansprüche 1 bis 9, wobei das gesamte Reduktionsgas atmosphärisch ist oder *in situ* produziert wird.

11. Verfahren nach einem der Ansprüche 1 bis 10, wobei die Verbundkörper einem *in situ* erzeugten Reduktionsgas für einen Zeitraum von etwa 20 Minuten bis etwa 2 Stunden ausgesetzt werden.

12. Verfahren nach einem der Ansprüche 1 bis 11, wobei das Reduktionsgas Gase umfasst, die aus einem oder mehreren von C₁ -C₁₀-Kohlenwasserstoff (wie etwa C₁-C₆ -Kohlenwasserstoff), H₂, CO, CO₂ und H₂O ausgewählt sind.

13. Verfahren nach einem der Ansprüche 1 bis 12, wobei die Metalloxidreduktion primär eine H₂-Gasreduktion ist.

14. Verfahren nach einem der Ansprüche 1 bis 13, wobei die Metalloxidreduktion innerhalb der Verbundkörper aufgrund von Reduktionsgas erfolgt, das sich innerhalb der Verbundkörper entwickelt.

## Revendications

1. Procédé de réduction d'oxyde métallique en métal dans un procédé continu comprenant :
a. l'introduction en continu de corps composites comprenant un matériau carboné de rang inférieur ayant une teneur en humidité d'environ 30 % à environ 70 % et un matériau contenant un oxyde métallique qui sont en contact étroit et dans un rapport de mélange à sec d'environ 1:2 à environ 1:10 en poids à une région supérieure d'une cornue verticale ;
b. l'acheminement desdits corps de ladite région supérieure à une région inférieure chauffée de ladite cornue dans lequel lesdits corps composites sont exposés à une température croissante jusqu'à environ 950 °C et dans lequel lesdits corps composites sont exposés à un gaz réducteur généré *in situ* pendant une période d'environ 15 minutes à environ 3 heures pour produire ainsi un produit contenant du métal réduit ; et
c. le retrait en continu du produit contenant du métal réduit d'une région inférieure de la cornue.

2. Procédé selon la revendication 1, dans lequel les corps composites comprenant un matériau carboné de rang inférieur et un oxyde métallique sont produits en mélangeant/effectuant une attrition d'un matériau carboné particulaire de rang inférieur et un matériau contenant un oxyde métallique avec addition facultative d'eau pour produire une masse plastique, en formant des corps composites humides et en faisant sécher pour produire des corps composites séchés.

3. Procédé selon la revendication 2, dans lequel le matériau contenant un oxyde métallique est un minerai contenant un oxyde métallique ou un matériau contenant un oxyde métallique qui est un produit ou un sous-produit d'un processus industriel.

4. Procédé selon la revendication 2, dans lequel la teneur en humidité desdits corps composites séchés va jusqu'à environ 15 % en poids.

5. Procédé selon l'une quelconque des revendications 2 à 4, dans lequel la formation de corps composites humides se fait par extrusion et les corps composites sont des granulés.

6. Procédé selon l'une quelconque des revendications 1 à 5, dans lequel le rapport de mélange à sec matériau carboné de rang inférieur/matériau contenant un oxyde métallique est d'environ 1:3 à environ 1:9 en poids, tel qu'environ 1:5 en poids.

7. Procédé selon l'une quelconque des revendications 1 à 6, dans lequel le matériau carboné de rang inférieur est du lignite ou du charbon sous-bitumineux.

8. Procédé selon l'une quelconque des revendications 1 à 6, dans lequel le matériau carboné de rang inférieur est de la tourbe.

9. Procédé selon l'une quelconque des revendications 1 à 8, dans lequel le matériau contenant un oxyde métallique comprend un ou plusieurs parmi l'oxyde de fer (FeO), l'hématite (Fe₂O₃), la magnétite (Fe₃O₄), la chromite (FeCr₂O₄),la magnésiochromite (MgCr₂O₄) , l'ilménite (FeO.TiO₂), le minerai de manganèse (Mn₂O₃) et la limonite (Fe.Ni)O(OH). H₂O.

10. Procédé selon l'une quelconque des revendications 1 à 9, dans lequel tout le gaz réducteur est atmosphérique ou produit *in situ.*

11. Procédé selon l'une quelconque des revendications 1 à 10, dans lequel lesdits corps composites sont exposés à un gaz réducteur généré *in situ* pendant une période d'environ 20 minutes à environ 2 heures.

12. Procédé selon l'une quelconque des revendications 1 à 11, dans lequel le gaz réducteur comprend des gaz choisis parmi un ou plusieurs des hydrocarbures C₁ - C₁₀ (tel que l'hydrocarbure C₁ - C₆), H₂, CO, CO₂ et H₂O.

13. Procédé selon l'une quelconque des revendications 1 à 12, dans lequel la réduction des oxydes métalliques est principalement une réduction du gaz H₂.

14. Procédé selon l'une quelconque des revendications 1 à 13, dans lequel la réduction des oxydes métalliques se produit à l'intérieur des corps composites en raison du gaz réducteur dégagé à l'intérieur des corps composites.
